(19) **Europäisches Patentamt**

**European Patent Office**

**Office européen des brevets**

(11) **EP 0 644 912 B1**

(12) **EUROPEAN PATENT SPECIFICATION**

(45) Date of publication and mention
of the grant of the patent:
**27.12.2000 Bulletin 2000/52**

(21) Application number: **93915245.0**

(22) Date of filing: **08.06.1993**

(51) Int. Cl.$^7$: **C08J 9/12**, C08J 9/14

(86) International application number:
**PCT/US93/05435**

(87) International publication number:
**WO 93/25608 (23.12.1993 Gazette 1993/30)**

(54) **ALKENYL AROMATIC POLYMER FOAMS AND PROCESSES FOR PREPARING SAME**

ALKENYL AROMATISCHE POLYMERSCHÄUME UND VERFAHREN ZU IHRER HERSTELLUNG

MOUSSES DE POLYMERE AROMATIQUE D'ALCENYLE ET PROCEDES DE PREPARATION

(84) Designated Contracting States:
**AT BE DE ES FR GB GR IT NL SE**

(30) Priority: **09.06.1992 US 895953**
**09.06.1992 US 895970**
**09.06.1992 US 896025**
**18.09.1992 US 947855**
**26.04.1993 US 52855**

(43) Date of publication of application:
**29.03.1995 Bulletin 1995/13**

(60) Divisional application:
**00109104.0 / 1 041 107**

(73) Proprietor:
**THE DOW CHEMICAL COMPANY
Midland, Michigan 48674 (US)**

(72) Inventors:
• **PAQUET, Andrew, N.
Granville, OH 43023 (US)**
• **SUH, Kyung, W.
Granville, OH 43023 (US)**
• **BINDER, Tomas, I.
D-7580 Buehl-Moos (DE)**
• **VO, Chau, V.
F-67460 Souffelweyersheim (FR)**
• **KOCSIS, Deborah, L.
Newark, OH 43055 (US)**

(74) Representative: **Casalonga, Axel
BUREAU D.A. CASALONGA - JOSSE
Morassistrasse 8
80469 München (DE)**

(56) References cited:
**EP-A- 0 353 701        EP-A- 0 439 692
EP-A- 0 445 847        EP-A- 0 464 581
DE-A- 2 008 481        US-A- 4 559 367
US-A- 4 795 763        US-A- 4 801 484**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a bimodal alkenyl aromatic polymer foam structure having enhanced flexural characteristics and/or enhanced thermally insulative properties. The present invention further relates to alkenyl aromatic polymer foam structures prepared using a halogen-free blowing agent comprising carbon dioxide, a $C_1$-$C_6$ alcohol, and water.

A bimodal foam structure is one with a bimodal cell size distribution of relatively larger primary cells and relatively smaller secondary cells. Most conventional foam structures have a unimodal cell size distribution only. A unimodal distribution has a uniform or only primary cell size distribution. Various bimodal foam structures are disclosed in US-A-4,455,272 and US-A-4,559,367 and in EP-A-0,353,701 (EPO Application No. 89114160.8).

US-A-4,559,367 relates a process for making a bimodal foam structure by incorporating finely-divided, water-containing organic vegetable matter into a polymer feedstock, melting the resulting solid mixture , incorporating a volatile foaming agent into the solid mixture melt to form a foamable mixture, and extruding the foamable mixture through a die to form the foam structure.

US-A-4,455,272 relates a process for making a bimodal foam structure by injecting water and a physical blowing agent into a polymer melt and extruding the resulting mixture through a die to form the structure.

EP-A-0353701 relates a process for making a bimodal foam structure by incorporating into the polymer feedstock a fine, water-absorbing mineral powder, melting the resulting solid mixture, incorporating a volatile foaming agent into the solid mixture melt to form a foamable mixture, and extruding the foamable mixture through a die to form the foam structure.

Bimodal foam structures offer advantages over conventional unimodal foam structures. The advantages include greater toughness and enhanced thermally insulating capability. Further, bimodal structures are typically made using water as a blowing agent component and unimodal structures typically are not. Since use of water as a blowing agent component is desirable for environmental reasons, the manufacture of bimodal structures is similarly desirable.

It would be desirable to further enhance the thermally insulating capability of the bimodal foam structures. It would be further desirable to increase such insulating capability without detrimentally affecting the physical properties of the foam structure or detrimentally affecting its manufacture or processing.

For environmental reasons, it would be desirable to provide a low density alkenyl aromatic polymer foam structure with a halogen-free blowing agent of economical components. It would further be desirable to be able to control cell size of the foam with selection of type and amount of blowing agent.

According to a first aspect of the present invention, there is a process for making a closed-cell, bimodal alkenyl aromatic polymer foam structure comprising a foam having relatively larger primary cells with an average cell size range of 0.05 to 1.2 millimeters and relatively smaller secondary cells ranging in cell size from 5 percent to 50 percent of the average cell size of the primary cells, the primary and secondary cells constituting at least 90 percent of the total volume of the foam structure, process comprising:

a) heating a thermoplastic polymer material comprising greater than 50 percent by weight of alkenyl aromatic polymer to form a melt polymer material;
b) incorporating into the melt polymer material at an elevated pressure a blowing agent to form a foamable gel;
c) cooling the foamable gel to a selected foaming temperature; and
d) expanding the foamable gel at a reduced pressure to form the foam structure, the process being characterized in that the blowing agent is incorporated in a liquid or gaseous form and comprises water in an amount of at least 1 weight percent water based upon the total weight of the blowing agent, the process being further charactetized in that carbon black is incorporated into the polymer melt in an amount sufficient to reduce the thermal conductivity of the foam structure.

According to a second aspect of the present invention, there is a thermally insulative, bimodal, alkenyl aromatic polymer foam structure comprising a) a foam of a thermplastic polymer material of greater than 50 percent by weight of alkenyl aromatic polymer and b) an amount of carbon black sufficient to reduce the thermal conductivity of the foam below that of a corresponding foam without carbon black. The foam has a bimodal cell distribution of relatively larger primary cells with a cell size range of 0.05 to 1.2 millimeters and relatively smaller secondary cells ranging in cell size from 5 percent to 50 percent of the average cell size of the primary cells. The primary and secondary cells constitute at least 90 percent of the total cell volume within the foam structure. The addition of the carbon black results in a surprising and synergistic increase in thermally insulating capability or decrease in thermal conductivity greater than that observed when carbon black is added to a conventional unimodal foam structure of substantially only primary foam cells.

The foam structures comprise greater than 50 and more preferably greater than 70 percent by weight of an alkenyl aromatic polymer. The term alkenyl aromatic polymer is inclusive of polymers derived from one or more alkenyl aromatic compounds such as styrene, methylstyrene, ethylstyrenes, divinyl benzene, chlorostyrenes, and bromostyrenes. Minor amounts (that is, 5 percent by weight) of copolymerizable compounds such as $C_1$-$C_4$ alkyl methacrylates and acrylates, $C_{2-8}$ olefins, and $C_{4-8}$ dienes can be comprised in the polymers. Suitable compounds include acrylic acid, methacrylic acid, maleic acid, acrylonitrile, maleic anhydride, vinyl acetate, butadiene, pentadiene, hexadiene, ethylene, propylene, butylene, hexene, and octene.

The alkenyl aromatic polymer material may contain other thermoplastic materials as long as the alkenyl aromatic polymer comprises greater than 50 weight percent of alkenyl aromatic monomeric units. Suitable plastic materials may be selected from any which can be blended with the alkenyl aromatic polymer and blown into a foam. Suitable plastics include polyolefins, polyvinylchloride, polystyrene, rubber-modified alkenyl aromatic polymers, cellulosic polymers, polycarbonates, polyamides, polyesters, and polyvinylidene chloride. Suitable polyolefins include polyethylene, polypropylene and polybutylene. Preferred structures comprise substantially (that is, greater than 95 percent) and most preferably entirely of polystyrene, because polystyrene foam is economical, and is commonly employed as a thermally insulating plastic foam.

The foam structures are generally formed by melting and mixing the alkenyl aromatic polymer itself or with other polymers if present to form a plastic melt, incorporating a blowing agent into the plastic melt to form a foamable gel, and extruding the foamable gel through a die to form the foamed structure. During melting and mixing, the polymers are heated to a temperature at or above the glass transition temperature and preferably above the melting point of the polymer. Melting and mixing of polymers and any additives are accomplished by any means known in the art such as with an extruder, mixer, or blender. Likewise, the blowing agent, including water, is incorporated or blended into the plastic melt by any of the same above-described means. The blowing agent is blended with the plastic melt at an elevated pressure sufficient to prevent substantial expansion of the resulting plastic gel or loss of generally homogeneous dispersion of the blowing agent within the gel. Unless otherwise specified, the blowing agent suitably is incorporated into the melt in a weight proportion of between 1 to 30 parts and preferably from 3 to 15 parts per hundred parts of the polymer to be expanded. The foamable gel is preferably passed through a cooler or cooling zone to lower the gel temperature to an optimum foaming temperature. For polystyrene, typical optimum foaming temperatures range from 110°C to 135°C. Melting, mixing, and cooling may occur in a single extruder, tandem extruders, or one or more extruders in series with separate mixers or coolers. The cooled gel is then passed through the die into a zone of reduced or lower pressure to form the foam structure. The zone of lower pressure is at a pressure lower than that in which the foamable gel is maintained prior to extrusion through the die. The lower pressure may be superatmospheric or subatmospheric (vacuum), but is preferably at an atmospheric level.

Unless otherwise specified, the blowing agents which may be utilized in combination with water include inorganic agents, volatile organic agents, and chemical agents which decompose into a gas or other byproducts. Suitable gaseous blowing agents include, but are not limited to nitrogen, carbon dioxide, air, and argon. Suitable volatile organic agents include halogenated and nonhalogenated aliphatic hydrocarbons. Suitable nonhalogenated aliphatic hydrocarbons include $C_{1-9}$ alkanes and $C_{2-9}$ alkenes such as n-butane, isobutane, n-pentane, ethane, propane, isopentane, n-hexane, and isohexane. Suitable halogenated aliphatic hydrocarbons include methyl chloride, ethyl chloride, perfluoromethane, chlorotrifluoromethane, dichlorodifluoromethane, trichlorofluoromethane, difluoromethane, perfluoroethane, 1-chloro-1,1-difluoroethane, 1,1-difluoroethane, 1,1,1,2-tetrafluoro-ethane, 1,1,1-trifluoroethane, pentafluoroethane, chlorotetrafluoroethane, 2-chloro-1,1,1,2-tetrafluoroethane, chloropentafluoroethane, dichlorotetrafluoroethane, trichlorotrifluoroethane, perfluoropropane, chloroheptafluoropropane, dichloropropane, difluoropropane, dichlorohexafluoropropane, perfluorobutane, chlorononafluorobutane, and perfluorocyclobutane. Suitable chemical blowing agents include azodicarbonamide, azodiisobutyronitrile, benzenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, and trihydrazino triazine.

Preferred blowing agents are those using a combination of water and an inorganic blowing agent such as nitrogen, carbon dioxide, or argon. A most preferred blowing agent comprises water and carbon dioxide. Unless otherwise specified, the blowing agent preferably comprises from 3 to 80 weight percent water and more preferably between 5 and 60 weight percent water based upon the total weight of the blowing agent.

The present structure may contain additional additives such as pigments, fillers, antioxidants, extrusion aids, nucleating agents, stabilizing agents, antistatic agents, fire retardants, and acid scavengers.

The foam component of the present structure preferably has density of 16 to 80 kilograms per cubic meter.

Bimodal foam structures are comprised of relatively larger primary foam cells with an average cell size range of 0.05 to 1.2 millimeters and relatively smaller secondary foam cells ranging in cell size from 5 percent to 50 percent of the average cell size of the primary cells. Cell size is determined by the optical microscopy method typically employed in the art in analyzing and characterizing bimodal foam structures. The relatively larger cells in the cell distribution are averaged to determine the average cell size of the primary cells, and the relatively smaller cells in the cell distribution are averaged to determine the average cell size of the secondary cells. The secondary cells may be situated within the cell walls or struts of the primary cells, or may be situated outside of or adjacent to the primary cells individually or in groups of two or more. A strut is a juncture of three or more cell walls. Preferably, the primary cells are generally dispersed throughout the secondary cells such that the foam of the present foam structure has a generally heterogeneous dispersion of the two cell types throughout. Additional teachings directed to plastic foams with bimodal cell distributions are disclosed in US-A-4,455,272 and US-A-4,559,367 and in EP-A-0353701.

The primary and secondary cells of bimodal foam structures constitute at least 90 percent and preferably at least 95 percent of the total cell volume within the foam structure. Cells larger than the primary cells and smaller than the secondary cells should constitute only a relatively small proportion (less than 10 percent) of the volume displaced to ensure that the desired bimodal distribution of cell sizes will be present in the structure. Voids or cavities present in the foam structure not in the nature of a foam cell are not considered part of the total cell volume within the foam structure.

Though not bound by any particular theory, bimodal cell size distributions are believed to result when foamable gels contain a level of water exceeding the solubility of water in the polymer melt at the extant processing conditions (for example, temperature, pressure, mechanical agitation, etc.). The excess water manifests itself in the form of secondary cells upon expansion of the foamable gel to a foam structure.

Use of aqueous blowing agent systems comprising 1 or more weight percent water based upon the total weight of the blowing agent typically result in bimodal foam distributions in foam structures made from commercially-available alkenyl aromatic polymers, particularly polystyrene.

The present foam structures are preferably at least 90 percent closed-cell according to ASTM D-2856. Such closed-cell foams are particularly efficacious in thermally insulative applications.

A bimodal foam structure containing carbon black is advantageous over a unimodal foam structure containing carbon black because the increase in thermally insulating capability or decrease in thermal conductivity observed for a given level of carbon black is surprisingly greater. In other words, a bimodal foam structure with carbon black will show a greater increase in thermally insulating capability or a greater decrease in thermal conductivity over a bimodal foam structure without carbon black than a unimodal foam structure with carbon black versus a unimodal foam structure without carbon black. This disparity in increase in insulating capability or decrease in thermal conductivity upon addition of carbon black between bimodal and unimodal foam structures is surprising and unexpected. Further, a bimodal foam structure will exhibit a higher R-value (thermally insulating capability) or lower thermal conductivity than a corresponding unimodal foam structure for a given level of carbon black. A corresponding foam structure is one substantially equivalent in average cell size according to ASTM D 3576-77 or optical microscopy in the primary cell size range and substantially equivalent in foam density. The bimodal foam structure containing carbon black is advantageous over a unimodal foam structure containing same whether the bimodal structure is with or without pinholes.

The carbon black preferably comprises between 1.0 and 25 weight percent and more preferably between 2 and 10 weight percent of the foam structure based upon the weight of alkenyl aromatic or non-alkenyl aromatic polymers in the structure. The carbon black is preferably uniformly dispersed throughout the foam matrix of the present structure. The carbon black is further preferably distributed uniformly throughout the cell walls.

It was found surprising the cell size in halogen-free foam structures of the present invention could be effectively controlled by controlling the amount of water in the blowing agent mixture. Increasing amounts of water provided foams exhibiting larger average cell sizes. Thus, the cell size of the foams could be controlled by varying the water content of the blowing agent mixture.

A halogen-free foam structure is a foam structure formed with a non-halogenated blowing agent or a blowing agent free of halogen content such as chlorine or fluorine. Non-halogenated blowing agents include those free of the halogenated aliphatic hydrocarbons seen above. The present foam structure is not limited to those formed of non-halogenated blowing agents, but such blowing agents may be preferred for some applications.

Excellent skin quality and large cross-section can be obtained with the halogen-free foam structures when the cell size of the foam is small, i.e., less than 1.2 millimeters (mm).

Halogen-free foam structures of one embodiment having closed cells of a relatively small cell size are herein also referred to as "small cell foam". Foam structures of another embodiment having closed cells of a relatively large cell size may be referred to as "large cell foam".

The term "small cell size" means cell sizes of from 0.1 to 1.2 mm. Advantageously, this small cell foam structure has at least from 97 to 99.9 percent, preferably from 98.5 to 99.8 percent, of closed gas-containing cells therein.

A small cell halogen-free foam structure preferably has cells having an average cell size of from 0.1 to 1.1 mm and more preferably from 0.1 to 0.9 mm, is of a generally uniform cellular structure, and without discontinuities. In a preferred embodiment, the small cell foam structure has no substantial variation in average cell size when cell size is measured by averaging cell diameter across the minimum cross-sectional dimension of the body (i.e., such as by ASTM Method D2842-69). The preferred embodiment further has a cross-sectional area of at least 8 in$^2$ (50 cm$^2$), a minimum cross-sectional dimension of at least 0.25 in (0.6 cm), and a density of from 1 to 5 pcf (16 kg/m$^3$ to 80 kg/m$^3$), preferably from 1.8-3.1 pcf (29 kg/m$^3$ to 50 kg/m$^3$).

The term "large cell size" means cell sizes of from greater than 1.2 to 3.0 mm. Advantageously, this large cell foam structure has at least from 97 to 99.9 percent, preferably from 98.5 to 99.8 percent, of closed gas-containing cells therein.

A large cell halogen-free foam structure preferably has cells having an average cell size of from 1.5 to 2.6 mm, and most preferably from 1.6 to 2.4 mm. In a preferred embodiment, the large cell foam structure has a cross-sectional area of at least 8 in$_2$ (50 cm$^2$), a minimum cross-sectional dimension of at least 0.25 in (0.6 cm), and a density of from 1 to 5 pcf (16 kg/m$^3$ to 80 kg/m$^3$), preferably from 1.6-2.0 pcf (25.6 kg/m$^3$ to 32 kg/m$^3$).

To prepare a small cell halogen-free foam, carbon dioxide is generally employed in the proportions of from 15 to 95 weight percent, preferably from 30 to 90 weight percent, most preferably from 40 to 70 weight percent of total blowing agent. The lower alcohol is employed at a level of 3 to 80 weight percent and preferably at a level of 6 to 60 weight percent of the total weight of the total blowing agent mixture. Water is employed from 0.4 to 20 weight percent, preferably at a level of 0.4 to 10 weight percent, and most preferably from 0.4 to 3 weight percent of the total weight of the total blowing agent mixture.

To prepare a large cell halogen-free foam, carbon dioxide is preferably employed at a level of from 15 to 50 weight percent and more preferably from 26 to 43 weight percent. The lower alcohol is employed at a level of from 10 to 80 weight percent and more preferably from 22 to 53 weight percent. The water is employed at a level of from 10 to 45 weight percent and more preferably from 21 to 35 weight percent. All weights are based upon the total weight of the blowing agent.

The blowing agent useful in this embodiment is a mixture of carbon dioxide, a lower alcohol and water. The term "lower alcohol" means any $C_1$-$C_6$ alcohol and preferably a $C_1$-$C_4$ alcohol. Lower alcohols include methanol, ethanol, iso-propanol, propanol, butanol, pentanol, hexanol, and isomers thereof. Ethanol is highly preferred.

For the halogen-free foam structure, the amount of water in the blowing agent mixture is based on anhydrous alcohol ("dry alcohol"). If alcohol having less than 99.9 percent alcohol ("wet alcohol") is used, the amount of water contained in the alcohol should be subtracted from the defined proportions and, if necessary, supplemented with additional water in order to satisfy the required amounts of water.

Though the preferred process for making the various foam structures taught herein is an extrusion process, it is understood that the structures may be formed by expansion of beads, which may be molded at the time of expansion to form structures of various shapes. Insulating panels formed from molded, expandable beads are commonly referred to as bead board.

The various foam structures may be used to insulate a surface by fashioning them in the form of panels and applying them to the surface. Such panels are useful in any conventional insulating applications such as, for example, roofing, buildings, and refrigerators.

The various foam structures may be formed into a plurality of discrete foamed particles for conventional loose-fill cushioning and packaging applications.

The following are examples of the present invention, and are not to be construed as limiting. Unless otherwise indicated, all percentages, parts, or proportions are by weight.

EXAMPLES

Example 1

Foam structures were made with an apparatus comprising a 2-1/2 inch (6.4 centimeter) extruder, a mixer, a cooler, and a die in series. Polystyrene resin having a molecular weight of 200,000 as measured by size exclusion chromotography was fed to the extruder along with 10 percent carbon black, 0.05 pph magnesium oxide, 0.05 pph calcium stearate, and 1.0 pph hexabromocyclododecane by weight to form a polymer melt. A mixture of 1.5 pph water and 4 pph carbon dioxide was added to the polymer melt in the mixer to form a foamable gel. The foamable gel was cooled to 125°C and extruded through the die and expanded between substantially parallel forming plates. The die pressure was 1100 psig (7.6 MPa). The foam structure had primary cells of 0.2 millimeter (mm) in size and a density of 2.3 pcf (36 kg/m$^3$). The foam had a bimodal cell structure with secondary cells in struts and cell walls wherein the secondary cells were one-fifth the size of the primary cell size. Further, the foam structure had pinholes between foam cells and the interior of the foam. Pinholes were present at between 1 percent and 30 percent of the cells. The K-factor or thermal conductivity of the foam at 180 days of aging was 0.202 Btu-in/F$^0$-ft$^2$-hr (0.0291 W/(m.k)).

Example 2

Using the apparatus and process of Example 1, 7 percent by weight carbon black, 0.05 parts calcium stearate, 0.05 parts magnesium oxide, and 0.2 parts linear low density polyethylene (density = 0.915-0.93 grams/cubic centimeter; melt index 2.0-2.5) per hundred parts polystyrene resin were blended in the extruder to form a polymer melt. A blowing agent mixture of 0.5 parts per hundred water and 4 parts per hundred carbon dioxide were added to the polymer melt to form a foamable gel. The foamable gel was cooled to 128°C, and expanded through a die to atmospheric pressure between parallel forming plates. The die pressure was 1200 psig (8.3 MPa). The foam structure had a bimodal cell distribution with an average primary cell size of 0.22 mm. The foam structure had internally connected pinholes between cells, and had secondary cells in the struts and cell walls. Pinholes were present at between 1 percent and 30 percent of the cells. Foam structure density was 3.2 pcf (51 kg/m$^3$) (with skins). The K-factor (Btu-in/F$^0$-ft$^2$-hr) after 3 days of aging was 0.212 (0.0306 W/(m.K)), which corresponded to R/inch of 4.7 (32 (m.K)/W; R/cm = 13 (m.K)/W) .

**Claims**

1. A process for making a closed-cell , bimodal alkenyl aromatic polymer foam structure comprising a foam having relatively larger primary cells with an average cell size range of 0.05 to 1.2 millimeters and relatively smaller secondary cells ranging in cell size from 5 percent to 50 percent of the average cell size of the primary cells, the primary and secondary cells constituting at least 90 percent of the total volume of the foam structure, said process comprising:

   a) heating a thermoplastic polymer material comprising greater than 50 percent by weight of alkenyl aromatic polymer to form a melt polymer material;
   b) incorporating into the melt polymer material at an elevated pressure a blowing agent to form a foamable gel;
   c) cooling the foamable gel to a selected foaming temperature; and
   d) expanding the foamable gel at a reduced pressure to form the foam structure, the process being characterized in that the blowing agent is incorporated in a liquid or gaseous form and comprises water in an amount of at least 1 weight percent water based upon the total weight of the blowing agent, the process being further characterized in that carbon black is incorporated into the polymer melt in an amount sufficient to reduce the thermal conductivity of the foam structure.

2. A thermally insulative, closed-cell alkenyl aromatic polymer foam structure comprising a foam of a thermoplastic polymer material of greater than 50 percent by weight of alkenyl aromatic polymer, the foam having relatively larger primary cells with an average cell size range of 0.05 to 1.2 millimeters and relatively smaller secondary cells ranging in cell size from 5 percent to 50 percent of the average cell size of the primary cells, the primary and secondary cells constituting at least 90 percent of the total cell volume within the foam structure, the foam structure being characterized in that the foam has an amount of carbon black sufficient to reduce the thermal conductivity of the foam below that of a corresponding bimodal foam without carbon black.

3. A process according to Claim 1, wherein the polymer material contains greater than 70 percent by weight of an alkenyl aromatic polymer.

4. A process according to any one of Claims 1 or 3, wherein the alkenyl aromatic polymer is polystyrene.

5. A process according to any one of Claims 1 or 3-4 wherein the blowing agent comprises water and carbon dioxide.

6. A process according to any of Claims 1 or 3-5, wherein the carbon black is incorporated at from 2 to 10 weight percent based upon the weight of polymer material.

7. A foam structure according to Claim 2, wherein the polymer material contains greater than 70 percent by weight of an alkenyl aromatic polymer.

8. A foam structure according to Claim 2 or 7, wherein the alkenyl aromatic polymer is polystyrene.

9. A foam structure according to any of Claims 2 or 7 to 8, wherein the foam structure has a generally heterogeneous dispersion of the two cell types throughout.

10. A foam structure according to any of Claims 2 or 7-9 wherein the carbon black is present at between 2 and 10 weight percent based upon the weight of polymer material.

11. A process according to any of claims 1 or 3-6 wherein pinholes are formed in the primary and secondary cells in an amount of between 1 and 30 percent by number of the total number of primary and secondary cells.

**Patentansprüche**

1. Verfahren zur Herstellung einer geschlossenzelligen bimodalen alkenylaromatischen Polymerschaumstruktur, umfassend einen Schaum mit relativ größeren Primärzellen mit einem Durchsschittszellengrößenbereich von 0,05 bis 1,2 Millimeter und relativ kleineren Sekundärzellen mit einem Bereich der Zellengröße von 5 % bis 50 % der Durchschnittszellengröße der Primarzellen, wobei die Primär- und Sekundärzellen wenigstens 90 % des Gesamtvolumens der Schaumstruktur bilden, wobei das Verfahren umfaßt:

a) Erhitzen eines thermoplastischen Polymermaterials, welches größer als 50 Gew.-% von alkenylaromatischem Polymerem umfaßt, zur Bildung eines geschmolzenen Polymermaterials;

b) Eingeben eines Blähmittels in das geschmolzene Polymermaterial bei einem erhöhten Druck zur Bildung eines schäumbaren Gels;

c) Kühlen des schaumbaren Gels auf eine ausgewählte Schäumungstemperatur; und

d) Expandieren des schaumbaren Gels bei einem reduzierten Druck zur Bildung der Schaumstruktur, wobei das Verfahren dadurch gekennzeichnet ist, daß das Blähmittel in einer flüssigen oder gasförmigen Form eingegeben wird und Wasser in einer Menge von wenigstens 1 Gew.-% Wasser, bezogen auf das Gesamtgewicht des Blähmittels, umfaßt, und wobei das Verfahren weiter dadurch gekennzeichnet ist, daß Ruß in die Polymerschmelze in einer ausreichenden Menge zur Reduzierung der Wärmeleitfähigkeit der Schaumstruktur eingegeben wird.

2. Wärmeisolierende geschlossenzellige alkenylaromatische Polymerschaumstruktur, umfassend einen Schaum eines thermoplastischen Polymermaterials von größer als 50 Gew.-% alkenylaromatischem Polymerem, wobei der Schaum relativ größere Primarzellen mit einem Durchschnittszellengrößenbereich von 0,05 bis 1,2 Millimeter und relativ kleinere Sekundärzellen mit einem Bereich der Zellengröße von 5 % bis 50 % der Durchschnittszellengräße der Primärzellen hat, wobei die Primär- und Sekundärzellen wenigstens 90 % des Gesamtvolumens innerhalb der Schaumstruktur bilden, und wobei der Schaum dadurch gekennzeichnet ist, daß der Schaum eine ausreichende Menge von Ruß zur Reduzierung der Wärmeleitfähigkeit unterhalb derjenigen eines entsprechenden bimodalen Schaumes ohne Ruß hat.

3. Verfahren nach Anspruch 1, bei welchem das Polymermaterial größer als 70 Gew.-% eines alkenylaromatischen Polymeren enthält.

4. Verfahren nach einem der Ansprüche 1 oder 3, bei welchem das alkenylaromatische Polymere Polystyrol ist.

5. Verfahren nach einem der Ansprüche 1 oder 3 - 4, bei welchem das Blähmittel Wasser und Kohlendioxid umfaßt.

6. Verfahren nach einem der Ansprüche 1 oder 3 - 5, bei welchem der Ruß mit von 2 bis 10 Gew.-%, bezogen auf das Gewicht des Polymermaterials, eingegeben wird.

7. Schaumstruktur nach Anspruch 2, bei welcher das Polymermaterial größer als 70 Gew.-% eines alkenylaromatischen Polymeren enthält.

8. Schaumstruktur nach Anspruch 2 oder 7, bei welcher das alkenylaromatische Polymere Polystyrol ist.

9. Schaumstruktur nach einem der Ansprüche 2 oder 7 bis 8, bei welcher die ganze Schaumstruktur eine allgemein heterogene Verteilung der zwei Zellentypen hat.

10. Schaumstruktur nach einem der Ansprüche 2 oder 7 - 9, bei welcher der Ruß mit zwischen 2 und 10 Gew. -%, bezogen auf das Gewicht des Polymermaterials, vorhanden ist.

11. Verfahren nach einem der Ansprüche 1 oder 3 - 6, bei welchem feine Löcher in den Primär- und Sekundärzellen in einer Menge zwischen 1 und 30 Anzahl-%, bezogen auf die Gesamtanzahl von Primär- und Sekundärzellen, gebildet werden.

## Revendications

1. Procédé pour fabriquer une structure de mousse de polymère aromatique alcénylé, bimodale, à cellules fermées, qui comprend une mousse présentant des cellules primaires relativement grandes dont la taille moyenne de cellules va de 0,05 à 1,2 mm, et des cellules secondaires relativement petites dont la taille de cellules représente de 5 à 50 % de la taille moyenne des cellules primaires, les cellules primaires et secondaires constituant au moins 90 % du volume total de la structure de mousse, ledit procédé comprenant:

a) le chauffage d'un matériau polymère thermoplastique comprenant plus de 50 % en poids de polymère aromatique alcénylé pour former un matériau polymère fondu;

b) l'incorporation dans le matériau polymère fondu, sous une pression élevée, d'un agent gonflant pour former un gel expansible ;

c) le refroidissement du gel expansible jusqu'à une température de moussage choisie ; et

d) l'expansion du gel expansible sous une pression réduite pour former une structure de mousse, le procédé étant caractérisé en ce que l'agent gonflant est incorporé sous une forme liquide ou gazeuse et comprend de l'eau en une quantité d'au moins 1 % en poids par rapport au poids total de l'agent gonflant, le procédé étant en outre caractérisé en ce que le noir de carbone est incorporé dans la masse fondue de polymère en une quantité suffisante pour réduire la conductivité thermique de la structure de mousse.

2. Structure de mousse de polymère aromatique alcénylé à cellules fermées, d'isolation thermique, comprenant une mousse d'un matériau polymère thermoplastique qui comporte plus de 50 % en poids de polymère aromatique alcénylé, la mousse présentant des cellules primaires relativement grandes dont la taille moyenne de cellules va de 0,05 à 1,2 mm, et des cellules secondaires relativement petites dont la taille de cellules représente de 5 à 50 % de la taille moyenne des cellules primaires, les cellules primaires et secondaires constituant au moins 90 % du volume total de la structure de mousse, la structure de mousse étant caractérisée en ce que la mousse présente une quantité de noir de carbone suffisante pour réduire la conductivité thermique de la mousse en dessous de celle d'une mousse bimodale correspondante sans noir de carbone.

3. Procédé selon la revendication 1, dans lequel le matériau polymère contient plus de 70 % en poids d'un polymère aromatique alcénylé.

4. Procédé selon la revendication 1 ou 3, dans lequel le polymère alcénylé aromatique est un polystyrène.

5. Procédé selon l'une quelconque des revendications 1, 3 et 4, dans lequel l'agent gonflant comprend de l'eau et du dioxyde de carbone.

6. Procédé selon l'une quelconque des revendications 1 et 3 à 5, dans lequel on incorpore du noir de carbone en une proportion de 2 à 10 % en poids par rapport au poids du matériau polymère.

7. Structure de mousse selon la revendication 2, dans lequel le matériau polymère contient plus de 70 % en poids d'un polymère aromatique alcénylé.

8. Structure de mousse selon la revendication 2 ou 7, dans laquelle le polymère aromatique alcénylé est un polystyrène.

9. Structure de mousse selon l'une quelconque des revendications 2, 7 et 8, dans laquelle la structure de mousse présente partout une dispersion globalement hétérogène de deux types de cellules.

10. Structure de mousse selon l'une quelconque des revendications 2 et 7 à 9, dans laquelle le noir de carbone est présent en une proportion de 2 à 10 % en poids par rapport au poids du matériau polymère.

11. Procédé selon l'une quelconque des revendications 1 et 3 à 6, dans lequel les trous d'aiguille sont formés dans les cellules primaires et secondaires en une quantité de 1 à 30 % en nombre par rapport au nombre total de cellules primaires et secondaires.